# EUROPEAN PATENT APPLICATION

(11) **EP 1 933 069 A1**
(43) Date of publication of application: **18.06.2008**
(21) Application number: 06125829.9
(22) Date of filing: 11.12.2006
(51) Int. Cl.: F16K 1/226, F16K 1/46, F16K 5/06

(54) **Valve**

(71) Applicant: Industrial Valves & Fittings, LLC, Washington, DC 20036 (US)
(72) Inventor: Rizzi, Daniel, 1466 Luxembourg (LU)
(74) Representative: Lampe, Sigmar

(57) **Abstract**

A valve seat comprises an annular recess for receiving a gasket. The gasket receiving annular recess comprises a further recess in the downstream direction.

## Description

The present invention relates to valves and valve seats. In particular, it relates to a valve with a valve seat comprising a recess for receiving a gasket.

### Background

In industrial valve arrangements for high-pressure applications, the closed valve disc exerts great pressure on the gasket, which in turn is supported against the valve action by the valve seat. Both the valve disc and the valve seat are typically fabricated from less resilient material, e.g. steel, while the gasket is made of a material that has a higher elasticity. The resilience of the gasket allows it to conform to the shape of the valve disc and the valve seat, thereby ensuring a complete closure of the valve arrangement.

Through repeated compression between the valve and the valve seat, however, the gasket suffers structurally and its useful life is reduced.

The present invention proposes a valve seat which overcomes the disadvantages of the known valve seats.

### Summary of the invention

According to an aspect of the present invention, a valve seat comprises an annular recess for receiving a gasket, said gasket receiving recess having a further recess extending in the downstream direction.

A valve seat comprises an annular recess for receiving a gasket, said gasket receiving recess having an inner radius and an outer radius, wherein the gasket receiving annular recess comprises an outer annular section having an inner radius and an outer radius, the outer section extending in a plane perpendicular to the axis of valve action, and an inner section having an inner radius and an outer radius, the inner section being recessed in the downstream direction.

The distance between the outer radius and the inner radius of the outer annular section may be between 10 to 90 percent of the distance between the outer radius and the inner radius of the gasket receiving recess.

The distance between the outer radius and the inner radius of the recessed inner section may be between 10 to 90 percent of the distance between the outer radius and the inner radius of the gasket receiving recess.

The recessed inner section of the gasket receiving annular recess may comprise an inverted frusto-conical section whose slope is arranged downstream of the plane defining the outer annular section.

The slope of the inverted frusto-conical section may be arranged pointing downstream of the plane defining the outer annular section at an angle preferably comprised in the interval between 2 and 8 degrees.

Even more preferably the angle is comprised in the interval between 3 and 6 degrees.

### Drawings

The present invention will now be described with reference to the following nonlimiting embodiments in which:
Figure 1 illustrates an exploded view of a valve assembly with a valve seat according to an embodiment of the present invention;
Figure 2 illustrates a view of a valve assembly with a valve seat according to an embodiment of the present invention;
Figure 3A shows a cross section of a valve seat according to an embodiment of the present invention;
Figure 3B shows a cross section of a valve seat according to a further embodiment of the present invention;
Figure 4A shows a detail of a valve seat according to a preferred embodiment of the present invention;
Figure 4B shows a detail of a valve seat according to a further preferred embodiment of the present invention;
Figure 4C shows a detail of a valve seat according to an alternative embodiment of the present invention;
Figure 4D shows a detail of a valve seat according to another alternative embodiment of the present invention.

### Detailed description

A valve comprises a body 1 with a passageway for fluids. This passageway comprises an inlet port for fluids entering the valve as well as an outlet port for fluids exiting the valve. The passageway further comprises an annular shoulder, whose inner diameter defines the effective flow through the valve. The annular shoulder serves as the valve seat in which the gasket 2 is arranged, against which the valve disc or ball 3 is pressed in operation when closing the valve.

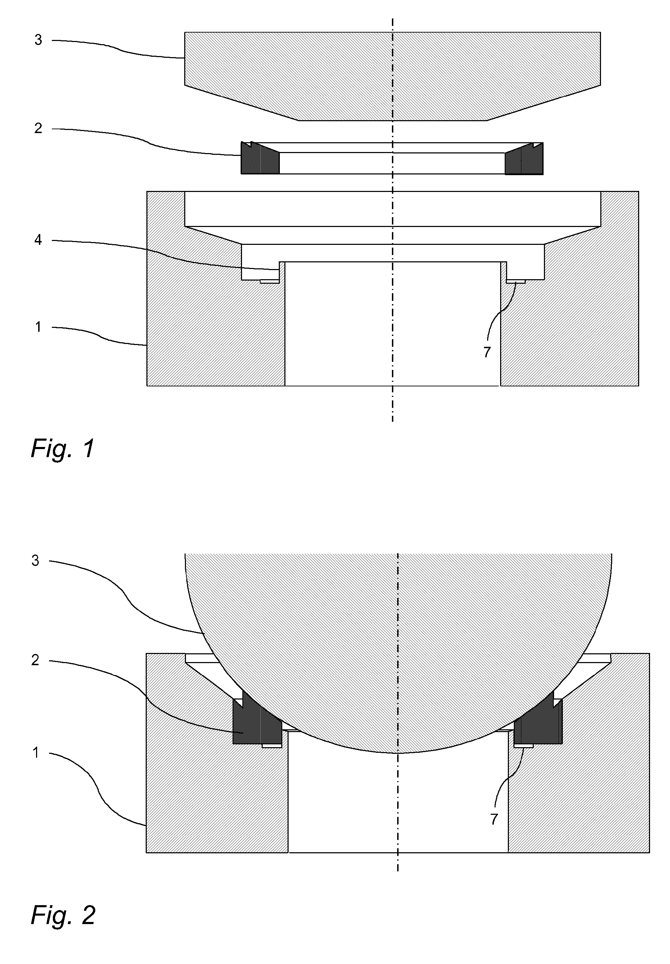

A first aspect of the present invention will now be discussed with reference to Fig. 1. The valve seat comprises an annular recess 4 for receiving a gasket 2. The gasket receiving annular recess 4 comprises an outer annulus-shaped section 5 extending in a plane perpendicular to the axis of valve action. This planar outer section 5 supports the gasket 2 when the valve disc or ball 3 closes. A recessed inner section 6 is also foreseen in the annular recess 4 for receiving the gasket 2. The inner section 6 is recessed in the downstream direction of the axis of valve action, thereby defining a further recess 7.

The gasket receiving recess 4 has an inner radius r_{g1} and an outer radius r_{g2}. The outer annular section 5 of the recess 4 has an inner radius rₒ₁ and an outer radius rₒ₂, the outer section 5 extending in a plane perpendicular to the axis of valve action. The recessed inner section 6 defining further recess 7 has an inner radius rᵢ₁ and an outer radius rᵢ₂.

In operation, as shown in Fig. 2, when the valve disc or ball 3 closes against the gasket 2, due to the high operating pressures required for closing the valve disc or ball 3, it exerts great pressure on the gasket 2. While the outer annulus-shaped section 5 of the gasket receiving recess 4 supports the gasket 2 when the valve disc or ball 3 closes, the inner section 6 allows for the gasket to give and deform slightly into further recess 7. The pressure and stress on the gasket 2 is thus reduced and the useful life of the gasket can be significantly extended.

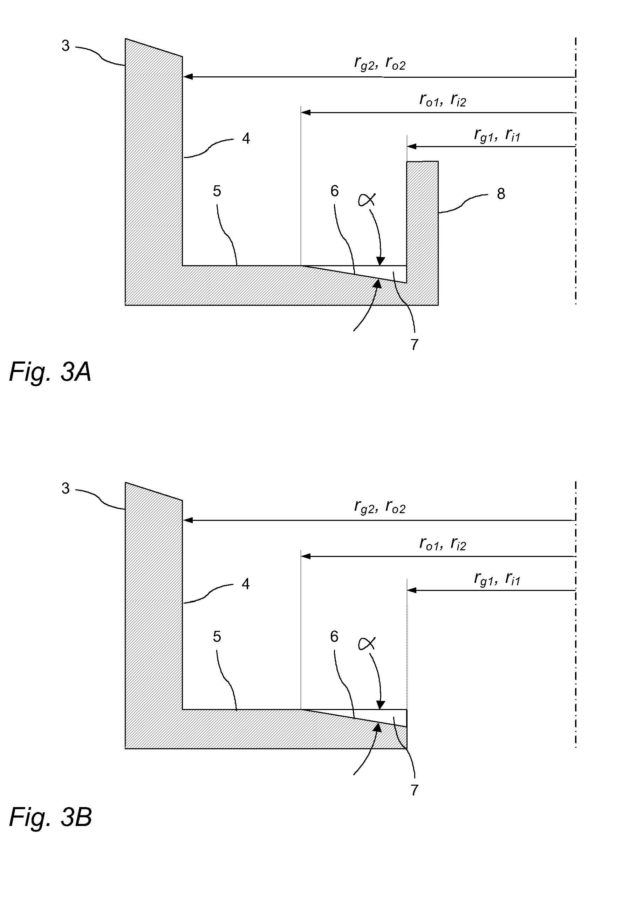

Turning now to Fig. 3A, in one embodiment of the present invention, the outer annulus-shaped section 5 of the gasket receiving recess extends between the outer radius rₒ₂ and the inner radius rₒ₁ of the outer annular section 5. The gasket-receiving recess 4 is defined by its outer radius r_{g2} and inner radius r_{g1}. An inner circumferential supporting wall 8 defines inner radius r_{g1}, while the outer circumferential wall of gasket receiving recess 4 defines outer radius r_{g2}.

Advantageously, the distance between the outer radius rₒ₂ and the inner radius rₒ₁ of the outer annular section 5 is comprised in the interval of 10 to 90 percent of the distance between the outer radius r_{g2} and the inner radius r_{g1} of the gasket receiving recess 4.

Referring again to Fig. 3A, the recessed inner section 6 of the gasket receiving recess extends between the outer radius rᵢ₂ and the inner radius rᵢ₁ of the recessed inner section 6. The outer radius r_{g2} and inner radius r_{g1} define the width of the gasket-receiving recess. Preferably, the distance between the outer radius rᵢ₂ and the inner radius rᵢ₁ of the recessed inner section 6 is comprised in the interval of 10 to 90 percent of the distance between the outer radius r_{g2} and the inner radius r_{g1} of the gasket receiving recess 4.

With reference to Fig. 3B, it is noted that in some embodiments it may be sufficient to define the gasket receiving recess 4 by its outer circumferential wall of radius r_{g2} and the annular outer section 5 in conjunction with the projection into the same plane of recessed inner section 6. Thus, inner radius r_{g1} of the gasket receiving recess 4 becomes the inner radius rᵢ₁ of the recess inner section 6, without the need for an interior circumferential supporting wall 8.

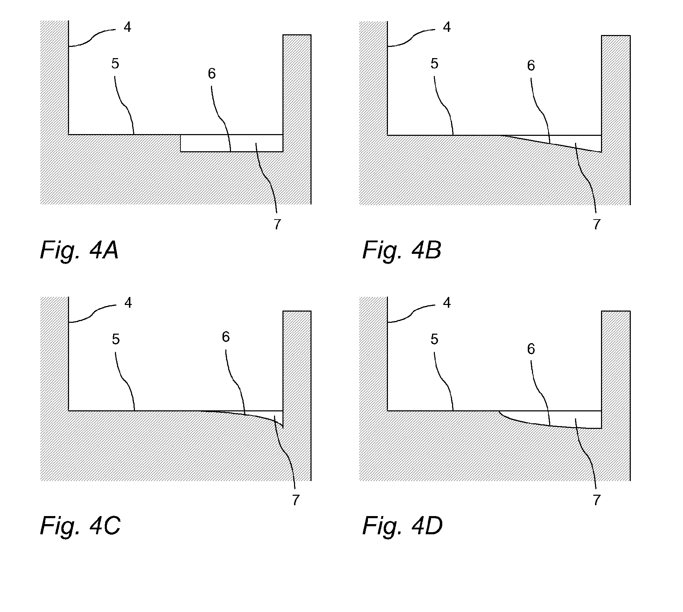

As illustrated in Fig. 4A, in a preferred embodiment the inner section 6 simply defines further annular recess 7, with inner section 6 extending in a plane perpendicular to the valve action.

In a preferred embodiment shown in Figure 4B, the recessed inner section of the gasket receiving annular recess comprises an inverted frusto-conical section. The slope of the frusto-conical recessed inner section is arranged downstream of the plane defining the outer annular section. For illustration purposes, the angle of the slope has been exaggerated in this figure.

Advantageously, the slope of the inverted frusto-conical section is arranged pointing downstream of the plane defining the outer annular section at an angle comprised in the interval between 2 and 8 degrees.

Even more advantageously, the slope of the inverted frusto-conical section is arranged pointing downstream of the plane defining the outer annular section at an angle comprised in the interval between 3 and 6 degrees.

Two more alternatives are shown in Fig. 4C and 4D, in which the recessed inner section 6 does not have a constant slope, but rather a convex or concave shape, respectively. While the convex shape illustrated in Fig. 4C eliminates a peak in the pressure distribution on the gasket, the concave shape shown in Fig. 4D provides a more voluminous further recess 7. It is of course possible to adapt the recessed inner section 6 of the gasket receiving annular recess 4 to a different shape.

The present invention is not limited to industrial high-pressure valves but may equally be applied to other valves having a valve seat for receiving a sealing gasket.

No doubt many other effective alternatives will occur to the skilled person. It will be understood that the present invention is not limited to the described embodiments and encompasses modifications apparent to those skilled in the art lying within the spirit and the scope of the claims appended hereto.

## Claims

1. A valve seat, comprising an annular recess (4) for receiving a gasket, said gasket receiving recess having an inner radius (r_{g1}) and an outer radius (r_{g2})
**characterised in that** the gasket receiving annular recess (4) comprises a further recess (7) extending in the downstream direction of the valve action.

2. The valve seat according to claim 1, wherein the gasket receiving annular recess (4) comprises
an outer annular section (5) having an inner radius (rₒ₁) and an outer radius (rₒ₂), the outer section extending in a plane perpendicular to the axis of valve action,
and an inner section (6) having an inner radius (rᵢ₁) and an outer radius (rᵢ₂), the inner section being recessed in the downstream direction from the outer annular section (5) and thereby defining said further recess (7).

3. The valve seat according to claim 1, wherein the distance between the outer radius (rₒ₂) and the inner radius (rₒ₁) of said outer annular section (5) is comprised in the interval of 10 to 90 percent of the distance between the outer radius (r_{g2}) and the inner radius (r_{g1}) of said gasket receiving recess (4).

4. The valve seat according to any of the preceding claims, wherein the distance between the outer radius (rᵢ₂) and the inner radius (rᵢ₁) of said recessed inner section is comprised in the interval of 10 to 90 percent of the distance between the outer radius (r_{g2}) and the inner radius (r_{g1}) of said gasket receiving recess (4).

5. The valve seat according to any of the preceding claims, wherein said recessed inner section (6) of said gasket receiving annular recess (4) comprises an inverted frusto-conical section whose slope is arranged downstream of the plane defining said outer annular section (5).

6. The valve seat according to claim 5, wherein the angle (α) of the slope of said inverted frusto-conical section pointing downstream of said plane defining said outer annular section is comprised in the interval between 2 and 8 degrees.

7. The valve seat according to claim 5, wherein the angle (α) of the slope of said inverted frusto-conical section pointing downstream of said plane defining said outer annular section (5) is comprised in the interval between 3 and 6 degrees.
